# EUROPÄISCHE PATENTSCHRIFT

(11) **EP 1 453 695 B1**
(45) Veröffentlichungstag und Bekanntmachung des Hinweises auf die Patenterteilung: **30.08.2006**
(21) Anmeldenummer: 02799025.8
(22) Anmeldetag: 12.12.2002
(51) Int. Cl.: B60W 10/00

(54) **ANTRIEBSSTRANG EINES KRAFTFAHRZEUGS UND VERFAHREN ZUM STEUERN EINES ANTRIEBSSTRANGS**
DRIVETRAIN ON A MOTOR VEHICLE AND METHOD FOR CONTROLLING A DRIVETRAIN
ENSEMBLE TRANSMISSION D'UN VEHICULE AUTOMOBILE ET PROCEDE DE COMMANDE D'UN ENSEMBLE TRANSMISSION

(30) Priorität: 13.12.2001 DE 10161299
(43) Veröffentlichungstag der Anmeldung: 08.09.2004
(73) Patentinhaber: SIEMENS AKTIENGESELLSCHAFT, 80333 München (DE)
(72) Erfinder: LAUER, Stefan, 93186 Pettendorf-Kneiting (DE); GRAF, Friedrich, 93161 Sinzing (DE)
(86) Internationale Anmeldenummer: PCT/DE2002/004559
(87) Internationale Veröffentlichungsnummer: WO 2003/049969

(56) Entgegenhaltungen:
- EP-A- 1 122 109
- WO-A-00/20242
- US-A- 5 656 921

## Beschreibung

Die Erfindung betrifft einen Antriebsstrang nach dem Oberbegriff von Anspruch 1. Der Antriebsstrang schließt ein eine erste Antriebsquelle, eine zweite, elektrische Antriebsquelle, einen hydrodynamischen Drehmomentwandler, ein automatisches Getriebe und diesen Bestandteilen jeweils zugeordnete Steuerungen.

Eine bekannte Konfiguration eines Antriebsstrangs ermöglicht eine deutliche Kraftstoffverbrauchseinsparung, die bei einem Antriebsstrang mit einem automatisierten Handschaltgetriebe erreicht wird (Probst G. et al: "Architektur des Integrierten Antriebsstrangmanagement unter funktionellen Aspekten und mit Berücksichtigung der Steuergerätetopologie im Kraftfahrzeug", 10. Aachener Kolloquium Fahrzeug- und Motorentecnnik 2001, S. 1027-1040). Diese Konfiguration bietet den Vorteil einer automatischen Kupplungsbetätigung, die im Fahrzeugstillstand und beim Anlassen die Antriebseinheit vom Abtrieb trennt (sogenannte "Start-Stopp-Funktion).

Das Dokument WO 0020242 offenbart einen Antriebsstrang nach dem Oberbegriff des Anspruchs 1.

Der Erfindung liegt die Aufgabe zugrunde, einen Antriebsstrang eines Kraftfahrzeugs zu schaffen, der mit einem konventionellen Automatikgetriebe, insbesondere einem Automatikgetriebe mit Planetenradsätzen, oder auch mit einem CVT-Getriebe, die gleichen Vorteile bietet wie der bekannte Antriebsstrang mit automatisiertem Handschaltgetriebe.

Die Aufgabe der Erfindung wird durch einen Antriebsstrang nach Anspruch 1 gelöst. Der Antriebsstrang weist eine übergeordnete Antriebsstrangsteuerung auf, die folgende Steuermodule einschließt: eine Fahrer- und Situationserkennung, eine Zustandssteuerung und ein Drehmomentmanagement.

Bei stehendem Antriebsmotor und stehendem Kraftfahrzeug und im Vorbereitungszustand für einen Start befindlicher Antriebsstrangsteuerung wird eine Hydraulikpumpe aktiviert. Es wird sicher gestellt, dass der Antriebsstrang kraftschlussfrei ist. Von einer Getriebesteuerung wird an die Antriebsstrangzustandssteuerung ein den Start des Verbrennungsmotors freigebender Befehl übermittelt. Bei im Vorbereitungszustand für einen Anfahrvorgang befindlicher Antriebsstrangsteuerung wird der Antriebsstrang geschlossen und ein Zielgang eingelegt. Es wird überprüft, ob die Getriebekapazität über einem vorgegebenen Grenzwert liegt und, wenn dies der Fall ist, werden ein Freigabebefehl für den Anfahrvorgang und die Getriebekapazität an die Antriebsstrangzustandssteuerung übermittelt und damit der Anfahrzustand eingenommen.

Zweckmäßige Weiterbildungen der Erfindung sind in den Unteransprüchen niedergelegt.

Die Vorteile der Erfindung liegen insbesondere in dem verringerten Kraftstoffverbrauch und der damit verbundenen Schonung der Umwelt. Außerdem wird in verschiedenen Systemzuständen die Kooperation zwischen dem Kurbelwellenstartergenerator und dem Getriebe verbessert.

Ausführungsbeispiele der Erfindung werden im folgenden anhand der Zeichnungen erläutert. Es zeigen:
- Figur 1: einen Antriebsstrang gemäß der Erfindung in schematischer Darstellung;
- Figur 2: die Funktionsstruktur einer übergeordneten Steuerung des Antriebsstrangs nach Figur 1;
- Figur 3: ein Signal- und Zustandsgrößendiagramm zum Erläutern der Durchführung einer Start-Stopp-Funktion;
- Figur 4: ein Blockschaltbild der Drehmomentkoordination zwischen der übergeordneten Antriebsstrangsteuerung und der Getriebesteuerung;
- Figur 5: ein Ablaufdiagramm eines bei der Start-Stopp-Funktion abgearbeiteten Programms, und
- Figur 6: ein Ablaufdiagramm eines bei den Funktionen Drehmomentverstärkung, Rollen bei offenem Antriebsstrang und regeneratives Bremsen abgearbeiteten Programms.

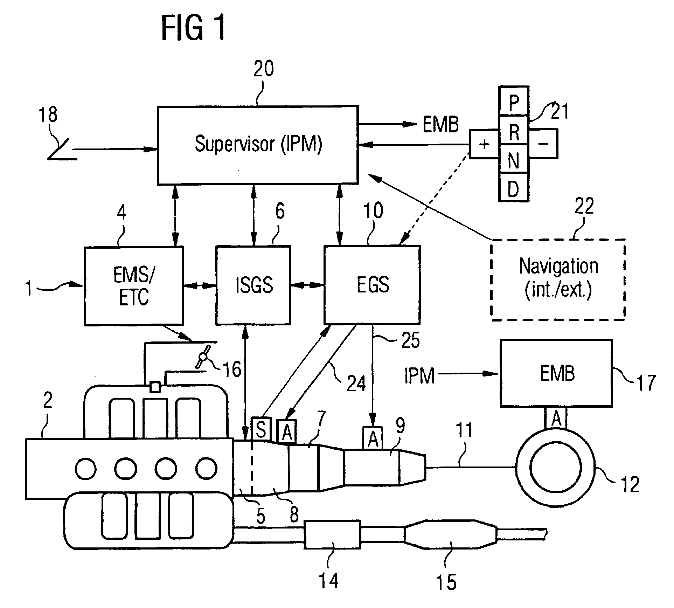

Ein Antriebsstrang 1 (Figur 1) eines Kraftfahrzeugs schließt mechanische Bestandteile ein, die im unteren Teil der Zeichnung dargestellt sind, und Steuerungen, die im oberen Teil der Zeichnung dargestellt sind: einen als erste Antriebsquelle 2 dienenden Verbrennungsmotor mit einer elektronischen Motorsteuerung (abgekürzt: EMS) 4, einen als zweite, elektrische Antriebsquelle 5 dienenden Kurbelwellenstartergenerator (abgekürzt: ISG) mit zugehöriger Steuerung (ISGS) 6, einen hydrodynamischen Drehmomentwandler 7 mit einer Wandlerüberbrückungskupplung 8, sowie ein automatisches Getriebe 9 mit einer elektronischen Getriebesteuerung (EGS) 10. Der Radantrieb ist durch eine Gelenkwelle 11 und ein angetriebenes Rad 12 angedeutet, die Abgasanlage durch einen Katalysator 14 und einen Schalldämpfer 15. Der hydrodynamische Drehmomentwandler 7 und die Wandlerüberbrückungskupplung 8 sind hier schematisch nebeneinander dargestellt, sie sind aber tatsächlich in einem gemeinsamen Gehäuse untergebracht.

Die Wandlerüberbrückungskupplung 7 weist einen Sensor S zum Bestimmen der Turbinendrehzahl und einen Aktuator A auf, die beide mit der Getriebesteuerung 10 verbunden sind. Die Getriebesteuerung ist mit mehreren Aktuatoren A in dem Getriebe 9 verbunden, von denen in der Zeichnung nur einer beispielhaft dargestellt ist. Die Motorsteuerung 4 schließt eine elektronische Drosselklappensteuerung ETC ein, die eine Drosselklappe 16 betätigt. Die Räder können mit einer elektromagnetischen Bremse 17 und einer zugehörigen Steuerung EMB versehen sein.

Über ein Gaspedal 18 übermittelt der Fahrer seine Wünsche an eine - auch als Supervisor bezeichnete - übergeordnete Antriebsstrangsteuerung (IPM) 20, die durch aus der Zeichnung ersichtliche Steuer- und Signalleitungen mit den Einzelsteuerungen des Antriebsstrangs 1 verbunden ist. Zum Eingeben der Fahrerbefehle dient ein Wählhebel 21 mit den üblichen Fahrstufen und der Parkstellung D, N, R und P und mit zwei Positionen oder Tasten zum Hochschalten "+" oder Rückschalten "-" des Getriebes um je einen Gang. Wie durch Pfeile EMB und IPM angedeutet, besteht eine Datenverbindung zwischen der Steuerung EMB und der Antriebsstrangsteuerung 20.

Falls ein Navigationssystem 22 vorhanden ist, ist die Antriebsstrangsteuerung 20 auch mit diesem verbunden. Durch die fahrdynamische Situation bedingte Bremssignale, zum Beispiel ABS- und ESP-Signale, werden von eigenen Steuergeräten erzeugt, die in der Zeichnung mit dem Steuergerät EMB der elektromagnetischen Bremse zusammengefasst sind.

Zusätzlich zu der Drosselklappe 16 oder einer anderen Einrichtung zum Steuern der Ansaugluftmenge steuert die Motorsteuerung 4 den Zündzeitpunkt, den Einspritzzeitpunkt und die in den Motor eingespritzte Kraftstoffmenge und/oder die Aufladung. Dies ist im einzelnen hier nicht dargestellt, da die Möglichkeiten zur Motorsteuerung für sich bekannt sind.

Die Getriebesteuerung 10 steuert über eine Signalleitung 24 den Drehmomentwandler 7 und über eine Signalleitung 25 die Übersetzung des Getriebes 9. Die Steuerungen 4, 6, 10 und 20 sind durch aus der Zeichnung ersichtliche bidirektionale Signal- und Steuerleitungen, zum Beispiel in Form eines Datenbusses, miteinander verbunden und tauschen über diese Datenleitungen Informationen aus, die für einen komfortablen und ökonomischen Fahrbetrieb des Kraftfahrzeugs nötig sind.

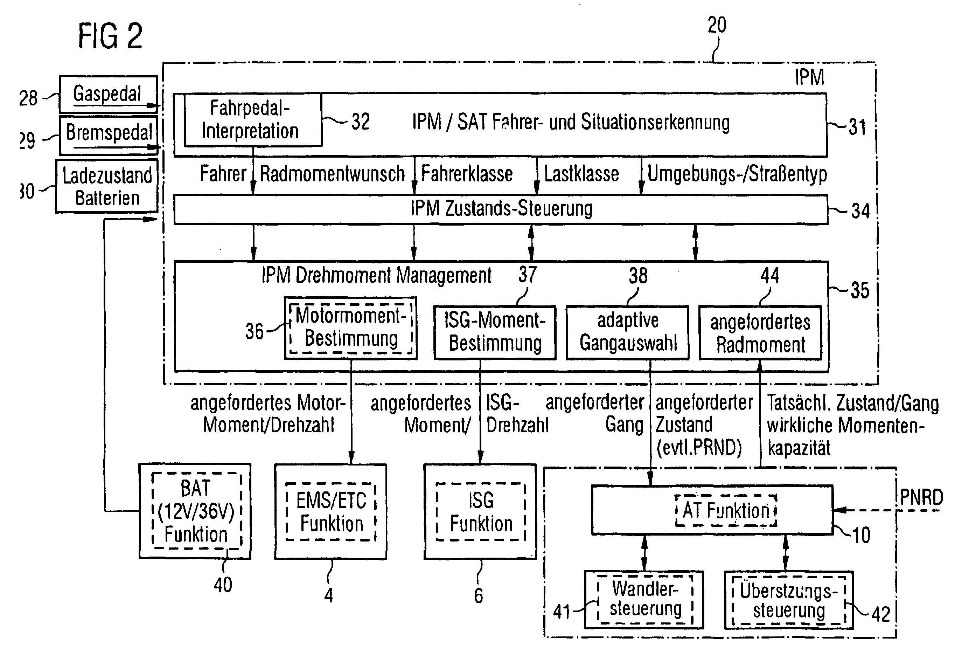

Die aus Figur 2 ersichtliche Funktionsstruktur oder Funktionsarchitektur der Antriebsstrangsteuerung lässt die Aufteilung der Steuerfunktionen auf die einzelnen Bestandteile der Steuerung, das Zusammenwirken dieser Bestandteile und den Austausch und die Auswertung von Informationen unter beziehungsweise in den einzelnen Bestandteilen der Antriebsstrangsteuerung und in weiteren Komponenten des Antriebsstrangs erkennen. Die den Zustand in dem Antriebsstrang 1 jeweils bestimmenden Signale werden im folgenden auch als Steuerungs- oder IPM-Zustand bezeichnet.

Die übergeordnete Antriebsstrangsteuerung 20 empfängt, in der Zeichnung als Blöcke dargestellte, Informationen 28 über die Stellung des Gas- oder Fahrpedals und 29 des Bremspedals sowie 30 über den Ladezustand der Batterien im Kraftfahrzeug. Sie schließt mehrere Funktionsblöcke ein, die als Programmblöcke oder Unterprogramme ausgebildet sind: eine Fahrer- und Fahrsituationserkennung 31, die anhand der empfangenen Informationen den Typ des Fahrers (zum Beispiel "vorsichtig" oder "leistungsbetont") klassifiziert und die jeweilige Fahrsituation (zum Beispiel "Stadtverkehr", "Autobahn" usw.) erfasst. Dazu erfolgt auch eine Interpretation 32 der Betätigungen des Fahrpedals.

Weitere Funktionsblöcke der übergeordneten Antriebsstrangsteuerung 20 sind eine Zustandssteuerung 34, die die Fahr- und Betriebszustände des Antriebsstrangs 1 steuert, und ein Drehmomentmanagement 35, das eine Drehmomentanforderung 36 an den Verbrennungsmotor 2, eine Drehmomentanforderung 37 an den Kurbelwellenstartergenerator 5 sowie den gewünschten Zustand des Getriebes 9 festlegt, das heißt eine adaptive Auswahl 38 des Getriebegangs durchführt, und das auch den Zustand der Wandlerüberbrückungskupplung 8 festlegt.

Die übergeordnete Antriebsstrangsteuerung 20 wirkt zusammen mit den Einzelsteuerungen folgender Funktionen des Antriebsstrangs 1: Funktion 40 oder BAT zum Überwachen und Steuern des Zustandes der Batterien im Kraftfahrzeug, Funktion 4 oder EMS/ETC zur Motorsteuerung mit elektronischer Motorleistungssteuerung (ETC = electronic throttle control), Funktion 6 oder ISGS zum Steuern des Startergenerators 5, und Funktion 10 oder AT zum Steuern des Automatikgetriebes, bestehend aus Funktionen 41 zum Steuern der Wandlerüberbrückungskupplung und 42 zum Wechsel des Übersetzungsverhältnisses.

Die Einzelsteuerung AT-Funktion 10 wertet die Signale des Wählhebels 21 für das Automatikgetriebe 9 aus und übermittelt an das Drehmomentmanagement 35 Informationen über den aktuellen Zustand des Getriebes, wie den Getriebegang und das von dem Getriebe tatsächlich übertragbare Drehmoment. Letztere Information wird benötigt, um das angeforderte Raddrehmoment einstellen zu können.

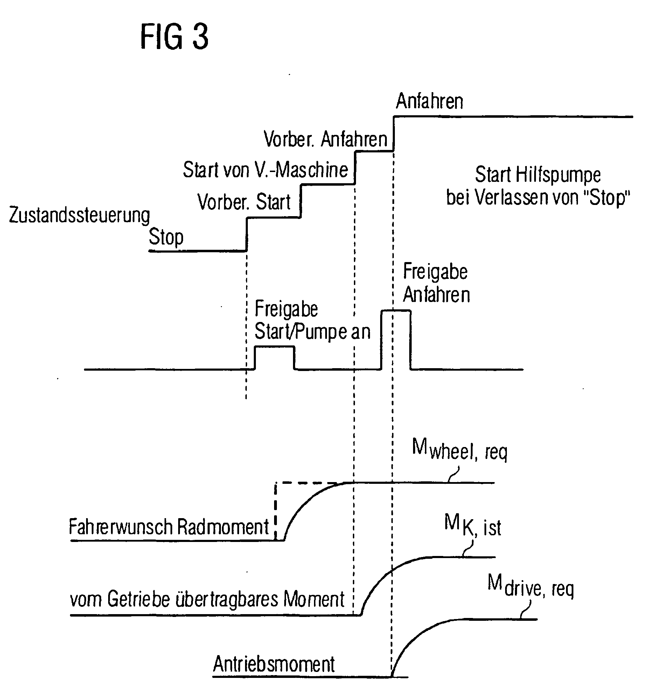

Das aus Figur 3 ersichtliche Signal- und Zustandsgrößendiagramm zeigt die Durchführung einer Start-Stopp-Funktion. Ausgangspunkt der gezeigten Situation ist ein stehendes Fahrzeug mit abgestelltem Verbrennungsmotor: "Stop" (oberer Bereich des Diagramms). Soll der Verbrennungsmotor zum Anfahren wieder gestartet werden, zum Beispiel ausgelöst durch Loslassen des Bremspedals, nimmt die übergeordnete Antriebsstrangsteuerung den IPM-Zustand "Vorbereitung Start" an und teilt diesen den übrigen Komponenten im Antriebsstrang mit. Dadurch kann eine elektrische Hydraulikpumpe gestartet werden (mittlerer Bereich des Diagramms).

Die Getriebesteuerung bringt das Getriebe in einen Zustand, der ein kraftschlussfreies Starten des Verbrennungsmotors erlaubt, und erteilt eine Freigabe zum Starten des Verbrennungsmotors. Die übergeordnete Antriebsstrangsteuerung IPM erkennt ein an den angetriebenen Rädern aufzubringendes Fahrerwunschmoment *M*_{*wheel.req*} (unterer Bereich des Diagramms), das über die Gaspedalstellung angefordert wird, oder aber ein Kriechmoment, wenn das Gaspedal nicht niedergedrückt ist. Nach Starten des Verbrennungsmotors wird in einem IPM-Zustand "Vorbereitung Anfahren" ein zum Anfahren geeigneter Gang von der Getriebesteuerung eingelegt. Dabei wird der Getriebezustand durch ein von dem Getriebe übertragbares Moment *M*_{*K,ist*} wiedergegeben, und es wird ein Signal "Freigabe Anfahren" ausgegeben, wonach von der übergeordneten Antriebsstrangsteuerung ein Antriebsmoment *M*_{*drive.req*} zum Anfahren eingestellt wird.

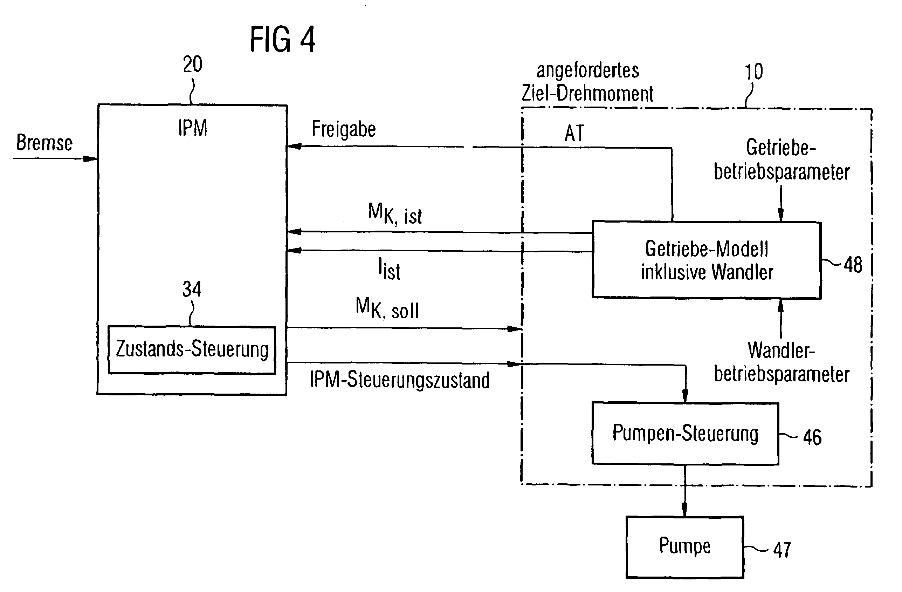

In dem aus Figur 4 ersichtlichen Blockschaltbild der Drehmomentkoordination zwischen der übergeordneten Antriebsstrangsteuerung 20 und der Getriebesteuerung 10 ist die dazu zwischen den beiden Steuerungen ablaufende Kommunikation dargestellt. Die übergeordnete Antriebsstrangsteuerung sendet an die Getriebesteuerung - einschließlich einer Pumpensteuerung 46 für deren hydraulische Pumpe 47 - den IPM-Zustand (vgl. Figur 3), sowie den Sollwert *M*_{*k,soll*} des vom Getriebe zu übertragenden Drehmomentes. Im Gegenzug erteilt ein in der Getriebesteuerung berechnetes Getriebe- und Wandlermodell 48 Freigaben "Start" und "Anfahren" und sendet an die übergeordnete Antriebsstrangsteuerung das zur Zeit eingestellte Übersetzungsverhältnis *I*_{*ist*} sowie den Istwert *M*_{*K.ist*} des vom Getriebe am Getriebeeingang übertragbaren maximalen Drehmomentes. Das maximal übertragbare Drehmoment entspricht der vom Getriebe eingestellten Kapazität, und der Getriebeeingang bedeutet hier die Eingangswelle des Drehmomentwandlers.

Der IPM-Zustand weist die anhand von Figur 3 erläuterten Werte "Stopp", "Vorbereitung Start", ... , "Anfahren" und "Kriechen" auf. "Freigabe Start" gibt das Anlassen des Motors frei und zeigt an, dass das Getriebe kraftschlussfrei - aber nicht notwendigerweise lastfrei - geschaltet ist. "Freigabe Anfahren" zeigt an, dass das Getriebe das Drehmoment zum Anfahren übertragen kann. Das Übersetzungsverhältnis Iᵢₛₜ schließt die aktuelle Drehmomentumwandlung im hydrodynamischen Drehmomentwandler mit ein.

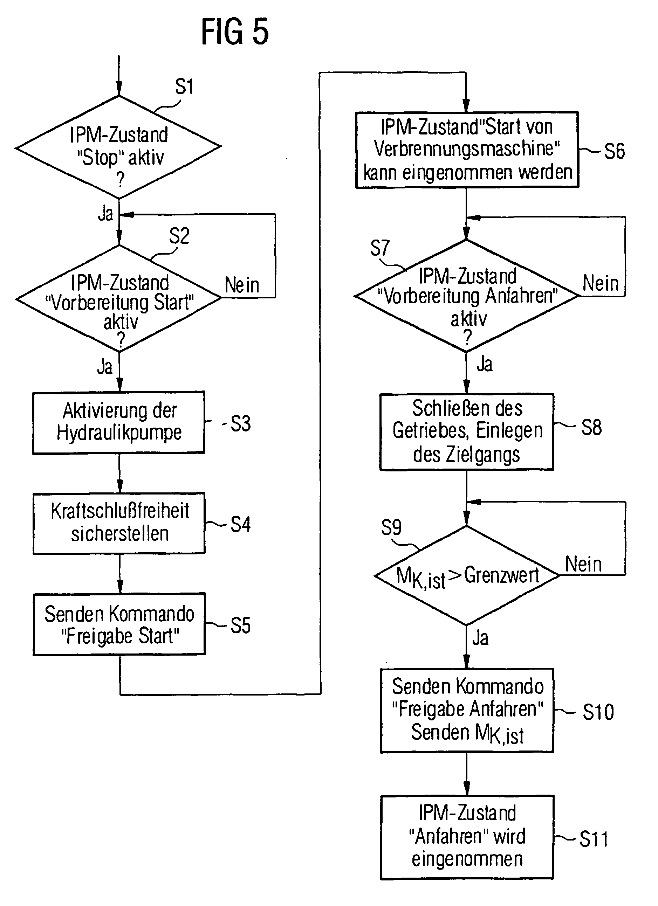

Das aus Figur 5 ersichtliche Ablaufdiagramm eines bei der Start-Stopp-Funktion abgearbeiteten Programms weist folgende Schritte auf:

Nach dem durch einen Pfeil angedeuteten Start des Programms wird in einem Schritt
- S1: überprüft, ob der IPM-Zustand "Stopp" aktiv ist. Trifft dies zu, wird in einem Schritt
- S2: abgefragt, ob der IPM-Zustand "Vorbereitung Start" aktiv ist. Trift dies nicht zu, wird die Abfrage so lange wiederholt, bis der Zustand aktiv ist. Dann wird in einem Schritt
- S3: die Hydraulikpumpe aktiviert, und anschließend in einem Schritt
- S4: sicher gestellt, dass der Antriebsstrang kraftschlussfrei ist. Danach wird in einem Schritt
- S5: der Befehl "Freigabe Start" ausgesendet. In einem Schritt
- S6: wird dann der IPM-Zustand "Start von Verbrennungsmaschine" eingenommen. Danach wird in einem Schritt
- S7: abgefragt, ob der IPM-Zustand "Vorbereitung Anfahren" aktiv ist. Falls nein, wird die Abfrage wiederholt, bis die Antwort ja ist. Dann wird in einem Schritt
- S8: das Getriebe geschlossen, das heißt der Antriebsstrang kraftschlüssig gemacht, und der Zielgang eingelegt. Danach wird in einem Schritt
- S9: abgefragt, ob das Drehmoment *M*_{*K,ist*} über einem vorgegebenen Grenzwert liegt. Falls nein, wird die Abfrage wiederholt, bis die Antwort ja ist. Dann werden in einem Schritt
- S10: ein Befehl "Freigabe Anfahren" und der Drehmomentwert *M*_{*K*,*ist*} ausgesendet. Schließlich wird in einem Schritt
- S11: der IPM-Zustand "Anfahren" eingenommen. Das Kraftfahrzeug fährt an.

- Damit ist ein Programmdurchlauf beendet.

Die Bestandteile des Antriebsstrangs 1, zwischen denen die vorstehend genannten Befehle und Signale ausgetauscht werden, sind anhand von Figur 4 erläutert worden.

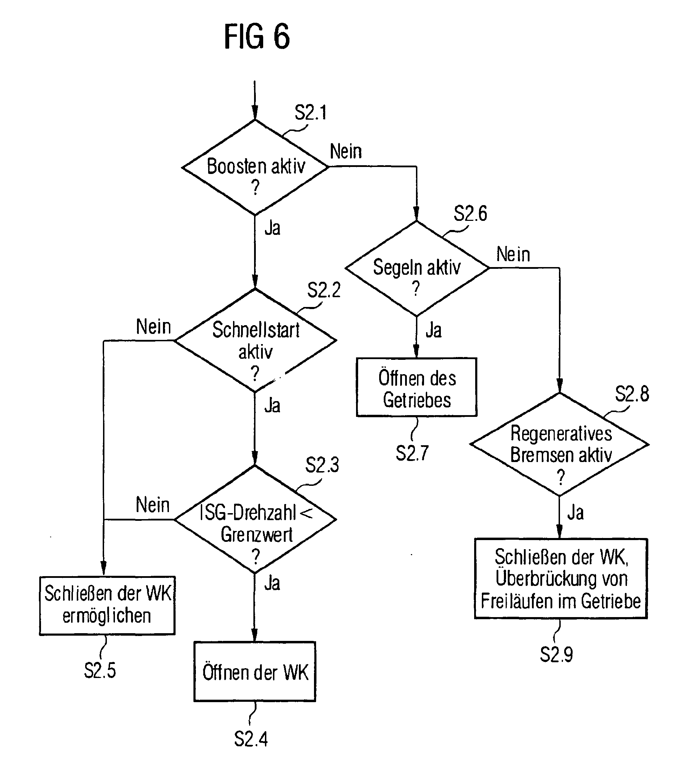

Das aus Figur 6 ersichtliche Ablaufdiagramm eines bei den Funktionen Drehmomentverstärkung (oder Boosten), Rollen bei offenem Antriebsstrang (oder Segeln) und regeneratives Bremsen abgearbeiteten Programms weist folgende Schritte auf:

Nach dem durch einen Pfeil angedeuteten Start des Programms wird in einem Schritt
- S2.1: überprüft, ob der IPM-Zustand "Boosten", das heißt Überhöhen des Drehmoments durch den hydrodynamischen Drehmomentwandler, aktiv ist. Trifft dies zu, wird in einem Schritt
- S2.2: abgefragt, ob der Zustand "Schnellstart" aktiv ist. Falls ja, wird in einem Schritt
- S2.3: abgefragt, ob die ISG-Drehzahl unter einem vorgegebenen Grenzwert liegt. Falls ja, wird in einem Schritt
- S2.4: die Wandlerüberbrückungskupplung geöffnet. Falls die Antwort auf die Abfrage S2.2 oder die Abfrage S2.3 nein ist, wird in einem Schritt
- S2.5: ein Schließen der Wandlerüberbrückungskupplung ermöglicht.
Ergibt die Überprüfung in dem Schritt S2.1, dass der IPM-Zustand "Boosten" nicht aktiv ist, so wird in einem Schritt
- S2.6: abgefragt, ob der Zustand "Segeln", das heißt ein Rollen des Kraftfahrzeugs bei geöffnetem Antriebsstrang, aktiv ist. Falls ja, wird in einem Schritt
- S2.7: das Getriebe geöffnet, das heißt es wird durch Öffnen von Kupplungen das Planetengetriebe direkt geöffnet, oder es werden Freiläufe freigegeben, und damit wird der Kraftschluss im Antriebsstrang unterbrochen. Falls nein, wird in einem Schritt
- S2.8: geprüft, ob der Zustand "Regeneratives Bremsen", das heißt Bremsen mit Wiedergewinnen von elektrischer Energie, aktiv ist. Ist das der Fall, wird in einem Schritt
- S2.9: die Wandlerüberbrückungskupplung geschlossen und es werden die Freiläufe im Getriebe überbrückt.

- Damit ist ein Programmdurchlauf beendet.

Mit dem vorstehend beschriebenen Antriebsstrang und der zugehörigen Steuerung lässt sich die Start-Stopp- und Kriechfunktion eines Kraftfahrzeugs auf zwei Arten durchführen.
1. Das Getriebe wird durch die Getriebesteuerung geöffnet (zum Beispiel durch Betätigen einer internen Nasskupplung). Nach Wiederanlassen des Verbrennungsmotors wird eine N-D-Schaltung durchgeführt, das heißt das Automatikgetriebe wird von dem Leerlauf in die Fahrstufe D geschaltet, und das Fahrzeug kriecht oder fährt los.
   Bei dieser Ausführung ist keine zusätzliche Hydraulikpumpe notwendig, da das Getriebe erst geschlossen wird, wenn der Motor bereits wieder läuft. Durch Messungen an einem Versuchsfahrzeug ist festgestellt worden, dass die Zeit zum Aufbau des Hydraulikdruckes vernachlässigbar klein ist. Dabei ist allerdings der Antriebsstrang für eine gewisse Zeit nach dem Lösen der Bremse offen, das heißt das Fahrzeug kann rollen. Diese Zeitdauer entspricht der bei einem AMT-System, das heißt bei einem Kraftfahrzeug mit einem automatisierten Handschaltgetriebe.
2. Ein Gang bleibt bei einem Stopp eingelegt: der 1. Gang wenn ein schneller Start gewünscht wird, ein höherer Gang, um einen Ruck beim Anlassen möglichst gering zu halten. Vorteil dieses Vorgehens ist: Ein Kriechmoment liegt bereits dann an, wenn sich der Kurbelwellenstartergenerator oder Verbrennungsmotor zu drehen beginnt. Allerdings ist dabei eine zusätzliche Hydraulikpumpe erforderlich, und durch das Anlassen entsteht ein Ruck oder Schock undefinierter Stärke.

Für den dazu erforderlichen Informationsaustausch im Antriebsstrang gibt es folgende Varianten:
a. Das Getriebe erteilt eine Freigabe, wenn es bereit ist, (volles) Drehmoment nach dem Anlassen zu übernehmen. Dies ist die einfachste Lösung. Dabei muss aber sichergestellt sein, dass beim Anlassen noch kein Drehmoment übertragen wird.
b. Der Antriebsstrang oder eine integrierte Antriebsstrangsteuerung melden am Ende der Stopphase, zum Beispiel beim Loslassen des Bremspedals, einen Momentenwunsch an (als binäres oder kontinuierliches Signal), das Getriebe stellt seine Kapazität in definierter Zeit her und meldet sie (als binäres oder kontinuierliches Signal). Dabei muss sichergestellt sein, dass beim Anlassen ein Signalwert "0" ausgeben und damit Kraftschlussfreiheit bewirkt wird.
c. Die Varianten a. und b. werden kombiniert: Dies ergibt einen Informationsaustausch im Quittierungs- (oder "Handshake"-) Betrieb.
d. Das Getriebe teilt, nachdem es von der übergeordneten Antriebsstrangsteuerung den Befehl erhalten hat Kraftschluss herzustellen, mit, wieviel Drehmoment es übernehmen kann (durch eine Modellrechnung ermittelt). Der Antriebsstrang reagiert mit einem entsprechenden Drehmoment, wobei die Funktion des "Masters" kurzfristig auf die Getriebesteuerung übergeht.
e. Die integrierte Antriebsstrangsteuerung 20 meldet den Basiszustand des Antriebsstrangs 1, um damit ein rechtzeitiges Aktivieren einer elektrischen Hilfspumpe in dem nächsten Betriebszustand zu ermöglichen.
f. Ist ein elektromagnetisch gesteuertes Bremssystem vorhanden, so kann die übergeordnete Antriebsstrangsteuerung über eine weitere Schnittstelle das Radmoment (oder dessen Aufbau) beeinflussen. Dies ist dann notwendig, wenn kein definierter oder sich sicher reproduzierender Momentenaufbau im Getriebe durchgeführt werden kann. Damit erfolgt also sozusagen eine "Freigabe zum Losfahren".
g. Es ist dabei unerheblich, ob das Getriebe selbsttätig zwischen den Stufen N und D wechselt, ob es wie überwiegend üblich autonom bleibt (einschließlich des Einlegens des R-Gangs) oder ob die zentrale übergeordnete Antriebsstrangsteuerung auch diese Betriebsmoden vorgibt.

Die "Boost"-Funktion, das heißt das Überhöhen der Antriebsquellen- oder Motordrehmomentverstärkung durch den Drehmomentwandler 7, wird in einer ersten Variante folgendermaßen durchgeführt. Die Wandlerüberbrückungskupplung 8 (abgekürzt: WK) ist zumindest anfangs geöffnet. Damit wird auch das Drehmoment des Kurbelwellenstartergenerators im Drehmomentwandler verstärkt und ergibt ein zusätzlich erhöhtes Anfahrmoment, das etwa einen sogenannten Schnellstart ermöglicht. Ab welcher Drehzahl die WK zweckmäßigerweise zu schließen ist, ist aus dem Verlauf des Drehmoments als Funktion der Drehzahl des Verbrennungsmotors und des Kurbelwellenstartergenerators zu ermitteln. In dieser Ausführung kann vorteilhafterweise der Wandler kleiner ausgelegt werden.

Bei einer zweiten Variante der "Boost"-Funktion wird die Wandlerüberbrückungskupplung geschlossen, und das erforderliche zusätzliche Motor- oder Antriebsquellendrehmoment wird von dem Kurbelwellenstartergenerator geliefert. Verluste durch den offenen Drehmomentwandler beim Anfahren entfallen hier, so dass der Wirkungsgrad besser als bei der ersten Ausführung ist. Die Entscheidung, welche der beiden Varianten beim Anfahren angewandt wird, trifft die übergeordnete Antriebsstrangsteuerung 20, und zwar abhängig von der Gaspedalbetätigung, dem Fahrertyp und dem Fahrzeugzustand. Aus diesen Größen ergibt sich jeweils ein größerer oder kleinerer zusätzlicher Drehmomentbedarf.

Der "Segeln"-Betrieb, das heißt das Rollen des Kraftfahrzeugs bei geöffnetem, nicht kraftschlüssigem Antriebsstrang, wird folgendermaßen durchgeführt. Das Getriebe wird geöffnet. Nach Beendigung des Segelns wird der Antriebsstrang wieder geschlossen.

Der Betrieb "Regeneratives Bremsen", das heißt mit Wiedergewinnen der beim Bremsen abgebauten kinetischen Energie als elektrische Energie, wird folgendermaßen durchgeführt. Die Wandlerüberbrückungskupplung wird geschlossen. Wird dagegen zum Laden ein hohes Bremsistmoment am Kurbelwellenstartergenerator angelegt, so würde bei offener Wandlerüberbrückungskupplung im Schubbetrieb die Motordrehzahl stark absinken, so dass einerseits die Ladeleistung gering wird und andererseits die Verluste im Wandler stark ansteigen (das Bremsmoment am Rad bleibt annähernd gleich). Durch eine geschlossene Wandlerüberbrückungskupplung bleibt die Motordrehzahl hoch und solche Probleme treten nicht auf.

Durch möglicherweise vorhandene Freiläufe ist das Getriebe im Schubbetrieb in einigen Fällen offen. Hier muss durch einen entsprechenden Befehl von der Antriebsstrangsteuerung an die Getriebesteuerung eine zum Freilauf parallele Bremse geschlossen werden oder durch Schalten ein anderer Gang ohne Freilauf-Beteiligung eingelegt werden.

Das Laden der Batterie bei Bergabfahrt oder Verzögerung wird folgendermaßen durchgeführt. Erkennt die Fahrer- und Fahrsituationserkennung 31 einen Fahrzustand Verzögerung oder Bergabfahrt (Fahrbahnsteigung < Grenzwert < 0), so wird der Antriebsstrang nicht zum Segeln geöffnet, sondern die Batterie geladen. Die Wandlerüberbrückungskupplung ist wie beim regenerativen Bremsen zu schließen.

## Patentansprüche

1. Antriebsstrang (1) eines Kraftfahrzeugs, der einschließt eine erste Antriebsquelle (2), eine zweite Antriebsquelle (5), einen hydrodynamischen Drehmomentwandler (7), ein automatisches Getriebe (9) und diesen Bestandteilen jeweils zugeordnete Steuerungen (4, 6, 10),
**dadurch gekennzeichnet,**
- **dass** er eine übergeordnete Antriebsstrangsteuerung (20) aufweist, die folgende Steuermodule einschließt: eine Fahrer- und Situationserkennung (31), eine Zustandssteuerung (34) und ein Drehmomentmanagement (35), und dass die übergeordnete Antriebsstrangsteuerung (20) derart ausgebildet ist,
- **dass** bei stehender erster Antriebsquelle und stehendem Kraftfahrzeug und in Vorbereitungszustand für einen Start befindlicher Antriebsstrangsteuerung eine Hydraulikpumpe aktiviert wird,
- **dass** sicher gestellt wird, dass der Antriebsstrang kraftschlussfrei ist,
- **dass** von einer Getriebesteuerung an die Antriebsstrangzustandssteuerung ein den Start der ersten Antriebsquelle freigebender Befehl übermittelt wird,
- **dass** bei im Vorbereitungszustand für einen Anfahrvorgang befindlicher Antriebsstrangsteuerung der Antriebsstrang geschlossen und ein Zielgang eingelegt wird,
- **dass** überprüft wird, ob die Getriebekapazität über einem vorgegebenen Grenzwert liegt, und
- **dass** wenn dies der Fall ist, ein Freigabebefehl für den Anfahrvorgang, die Getriebekapazität an die Antriebsstrangzustandssteuerung übermittelt und damit der Anfahrzustand eingenommen wird.

2. Antriebsstrang nach Anspruch 1,
**dadurch gekennzeichnet,**
**dass** durch die übergeordnete Antriebsstrangsteuerung (20) folgende Funktionen durchgeführt werden: ein Start-Stopp-Betrieb des Kraftfahrzeugs, eine Antriebsquellendrehmomentverstärkung, ein Rollen des Kraftfahrzeugs bei nicht kraftschlüssigem Antriebsstrang und ein regenerativer Bremsbetrieb.

3. Antriebsstrang nach Anspruch 1 oder 2,
**dadurch gekennzeichnet,**
**dass** durch die übergeordnete Antriebsstrangsteuerung (20) ein Kriechbetrieb des Kraftfahrzeugs gesteuert wird.

4. Antriebsstrang nach einem der vorhergehenden Ansprüche,
**dadurch gekennzeichnet,**
**dass** die übergeordnete Antriebsstrangsteuerung (20) mit einer Fahrer- und Fahrsituationserkennung (31) versehen ist, durch die bei Erkennen einer Verzögerung oder Bergabfahrt veranlasst wird, dass der Antriebsstrang nicht geöffnet und die Wandlerüberbrückungskupplung geschlossen wird, so dass die Batterie des Kraftfahrzeugs durch den Kurbelwellenstartergenerator geladen wird.

5. Antriebsstrang nach einem der vorhergehenden Ansprüche,
**dadurch gekennzeichnet,**
**dass** die zweite Antriebsquelle als Kurbelwellenstartergenerator (6) ausgebildet ist.

6. Antriebsstrang nach einem der vorhergehenden Ansprüche,
**dadurch gekennzeichnet,**
**dass** das Getriebe durch die Getriebesteuerung geöffnet und nach Wiederanlassen der ersten Antriebsquelle das Automatikgetriebe von dem Leerlauf in eine Vorwärts-Fahrstufe geschaltet wird, wonach das Kraftfahrzeug anfährt.

7. Antriebsstrang nach einem der vorhergehenden Ansprüche,
**dadurch gekennzeichnet,**
**dass** von dem Getriebe, nachdem es von der übergeordneten Antriebsstrangsteuerung den Befehl erhalten hat Kraftschluss herzustellen, dieser mitgeteilt wird, wieviel Drehmoment das Getriebe übernehmen kann, und dass danach von der Antriebsquelle des Kraftfahrzeugs ein entsprechendes Drehmoment geliefert wird.

8. Antriebsstrang nach einem der vorhergehenden Ansprüche,
**dadurch gekennzeichnet,**
**dass** die Verstärkung des Antriebsquellendrehmoments durch den Drehmomentwandler dadurch überhöht wird, dass diese anfangs geöffnet ist und somit auch das Drehmoment des Kurbelwellenstartergenerators verstärkt und ein zusätzlich erhöhtes Anfahrmoment ergibt.

## Claims

1. Drive train (1) of a motor vehicle, which incorporates a first drive source (2), a second drive source (5), a hydrodynamic torque converter (7), an automatic gearbox (9) and respective control facilities (4, 6, 10) associated with these components,
**characterised in that**
- it has a higher-level drive train control unit (20) which includes the following control modules: a driver and situation detection facility (31), a state control facility (34) and a torque management system (35), and that the higher-level drive train control unit (20) is designed such that
- when the first drive source is at a standstill and the motor vehicle is at a standstill and the drive train control unit is in a preparatory state for a start, a hydraulic pump is activated,
- it is ensured that the drive train has a friction-free connection,
- a command enabling starting of the first drive source is issued by a gearbox control unit to the drive train state control unit,
- when the drive train control unit is in the preparatory state for a drive-off operation, the drive train is closed and a target gear is engaged,
- a check is made as to whether the gearbox capacity exceeds a predefined limit value, and
- if this is the case, an enabling command for the drive-off operation and the gearbox capacity are sent to the drive train state control unit and the drive-off state is thus assumed.

2. Drive train according to claim 1,
**characterised in that**
the following functions are performed by the higher-level drive train control unit (20): a start-stop mode of operation of the motor vehicle, a drive source torque amplification, a rolling of the motor vehicle in the case of a drive train with a friction-free connection, and regenerative braking operation.

3. Drive train according to claim 1 or 2,
**characterised in that**
a crawl mode of operation of the motor vehicle is controlled by the higher-level drive train control unit (20).

4. Drive train according to one of the preceding claims,
**characterised in that**
the higher-level drive train control unit (20) is provided with a driver and driving situation detection facility (31) which serves in the event of detection of deceleration or downhill travel to cause the drive train not to be opened and the converter bridging clutch to be closed, with the result that the battery of the motor vehicle is charged by the crankshaft starter generator.

5. Drive train according to one of the preceding claims,
**characterised in that**
the second drive source takes the form of a crankshaft starter generator (6).

6. Drive train according to one of the preceding claims,
**characterised in that**
the gearbox is opened by the gearbox control unit and after re-starting the first drive source the automatic gearbox is shifted from idling into a forward drive stage, whereupon the motor vehicle drives away.

7. Method according to one of the preceding claims,
**characterised in that**
the gearbox, after it has received the command from the higher-level drive train control unit to establish a frictional connection, makes known to the latter how much torque the gearbox is able to accept, and a corresponding torque is then delivered by the drive source of the motor vehicle.

8. Method according to one of the preceding claims,
**characterised in that**
the amplification of the drive source torque is increased by the torque converter by virtue of the fact that this is open initially and thus also amplifies the torque of the crankshaft starter generator and produces an additionally increased drive-off torque.

## Revendications

1. Groupe motopropulseur (1) d'un véhicule à moteur qui comprend une première source de propulsion (2), une deuxième source de propulsion (5), un convertisseur de couple hydrodynamique (7) une boîte de vitesses automatique (9) et les module de commande (4, 6, 10) associés aux composants précités,
**caractérisé en ce que**
- il est équipé d'un système central de commande du groupe motopropulseur (20) qui comporte les modules de commande suivants : un dispositif de reconnaissance du conducteur et de la situation de conduite (31), un dispositif de contrôle d'état (34) ainsi qu'un dispositif de gestion du couple (35) et que le système central de commande du groupe motopropulseur (20) est conçu de manière à
- activer une pompe hydraulique lorsque le système de commande du groupe motopropulseur est en état de préparation d'un démarrage, le véhicule à moteur étant à l'arrêt et la première source de propulsion ne tournant pas,
- assurer que le groupe motopropulseur est débrayé et donc sans prise,
- ce que le module de commande de la boîte de vitesses transmette un signal de validation autorisant le démarrage de la source de propulsion au dispositif de contrôle d'état du groupe motopropulseur,
- embrayer le groupe motopropulseur en enclenchant une vitesse souhaitée lorsque le système de commande du groupe motopropulseur se trouve en état de préparation d'une mise en marche,
- vérifier si la capacité de la boîte de vitesses est supérieure à une valeur minimum prédéfinie, et
- transmettre, le cas échéant, un signal de validation autorisant la mise en marche et indiquant la capacité de la boîte de vitesses au dispositif de contrôle d'état du groupe motopropulseur ce qui conduit à l'adoption de l'état de mise en marche.

2. Groupe motopropulseur selon la revendication 1,
**caractérisé en ce que**,
le système central de commande du groupe motopropulseur (20) permet de réaliser les fonctions suivantes : un fonctionnement start / stop du véhicule à moteur, une amplification du couple des sources de propulsion, un fonctionnement en roue libre alors le groupe motopropulseur est sans prise ainsi qu'un fonctionnement de freinage régénératif.

3. Groupe motopropulseur selon les revendications 1 ou 2,
**caractérisé en ce que**
le système central de commande du groupe motopropulseur (20) pilote un fonctionnement de rampage du véhicule à moteur.

4. Groupe motopropulseur selon une des revendications précitées,
**caractérisé en ce que**
le système central de commande du groupe motopropulseur (20) est équipé d'un dispositif de reconnaissance du conducteur et de la situation (31) qui, lorsqu'il reconnaît une décélération ou une conduite en descente, permet de charger la batterie du véhicule à moteur par l'alterno-démarreur intégré, en empêchant le débrayage du groupe motopropulseur et en maintenant l'embrayage de prise directe verrouillé.

5. Groupe motopropulseur selon une des revendications précitées,
**caractérisé en ce que**
la deuxième source de propulsion se présente sous forme d'un alterno-démarreur intégré (6).

6. Groupe motopropulseur selon une des revendications précitées,
**caractérisé en ce que**
le module de commande de la boîte de vitesses effectue le désaccouplement et que, suite au redémarrage de la première source de propulsion, ledit module fait passer la boîte de vitesses automatique de la position neutre à une position de marche avant, ce qui entraîne la mise en marche du véhicule à moteur.

7. Groupe motopropulseur selon une des revendications précitées,
**caractérisé en ce que**
la boîte de vitesses, après avoir reçu le signal d'accouplement de la part du système central de commande du groupe motopropulseur, communique à ce dernier sa capacité de prise en charge de couple et qu'ensuite, la source de propulsion du véhicule à moteur fournit un couple correspondant.

8. Groupe motopropulseur selon une des revendications précitées,
**caractérisé en ce que**
l'amplification du couple de la source de propulsion par le convertisseur de couple est accentuée par le fait que ce dernier n'est initialement pas verrouillé et amplifie ainsi également le couple de l'alterno-démarreur, ce qui conduit à une augmentation supplémentaire du couple disponible pour la mise en marche.
